# EUROPEAN PATENT APPLICATION

(11) **EP 2 058 640 A2**
(43) Date of publication of application: **13.05.2009**
(21) Application number: 08253638.4
(22) Date of filing: 06.11.2008
(51) Int. Cl.: G01M 13/02

(54) **Apparatus and method for monitoring a system**

(30) Priority: 07.11.2007 GB 0721785; 11.04.2008 GB 0806567
(71) Applicant: Sensdata Limited, Rotherham S66 9EZ (GB)
(72) Inventor: Brown, Robert Ernest, Rotherham S66 9EZ (GB)
(74) Representative: Chapman, Paul Nicholas

(57) **Abstract**

Apparatus (104) for monitoring a system (100) comprising a drive pulley (101), a load pulley (102) and a belt (103) operatively connecting the drive pulley and the load pulley. The apparatus includes a first object (115) locatable on the drive pulley and a second object (116) locatable on the load pulley. In addition, the apparatus includes a first sensor (201) configured to detect movement of the first object and thereby generate a first signal (221) for indicating the rotation of a drive pulley and a second sensor (202) configured to detect movement of the second object and thereby generate a second signal (222) for indicating the rotation of a load pulley. A processing means (210) is configured to generate a first measurement value dependent upon a period between features of the first signal, and generate a second measurement value dependent upon a period between features of the second signal. It then calculates a value indicative of efficiency of the system from the first measured value and the second measured value, and provides an output signal in dependence of the calculated value.

## Description

### Technical Field

The present invention relates to apparatus and a method for monitoring a system comprising a drive pulley, a load pulley and a belt operatively connecting the drive pulley and the load pulley.

Many systems are known in industry that make use of a belt for transferring power between a drive pulley and a load pulley. Such an arrangement may be found in air conditioning systems, ventilation systems, pumping systems, etc. It is usual for the pulley/belt arrangement to be in a location that is not frequently in view, either being located in rooms that are not frequently used, or concealed in cabinets or behind panels, etc. As a consequence, the belt may only be observed when regular maintenance takes place, or when an investigation follows the observation of adverse symptoms caused by a broken belt. Consequently, such a belt may become worn, causing it to slip, or in some cases it may become completely useless or broken, without anyone becoming aware for a prolonged period. A slipping or broken belt will at least result in wasted energy, but may also result in damage being caused.

### Brief Summary of the Invention

According to a first aspect of the present invention, there is provided apparatus for monitoring a system as claimed in claim 1.

Thus the apparatus of the present invention is used to monitor an existing system, and provide an output indicative of the correct or incorrect functioning of the system.

According to a second aspect of the present invention, there is provided a method of monitoring a system as claimed in claim 13.

### Brief Description of the Several Views of the Drawings

Figure 1 shows a system 100 comprising a drive pulley 101, a load pulley 102 and a belt 103 operatively connecting said drive pulley and said load pulley, along with apparatus 104 configured to monitor said system;
Figure 2 shows a schematic diagram of the monitoring apparatus 104;
Figure 3 shows a flowchart providing an overview of the operation of the microcontroller 210;
Figure 4 shows in detail the step 302 of Figure 3;
Figure 5 shows in detail the step 303 of Figure 3;
Figure 6 shows in detail the step 304 of Figure 3;
Figure 7 shows the system 100 previously shown in Figure 1, along with an alternative apparatus 704 configured to monitor the system;
Figure 8 shows a partial cross-sectional view of the Hall effect sensor unit 721; and
Figure 9 shows a schematic diagram of the monitoring apparatus 704.

### Description of the Best Mode for Carrying out the Invention

### Figure 1

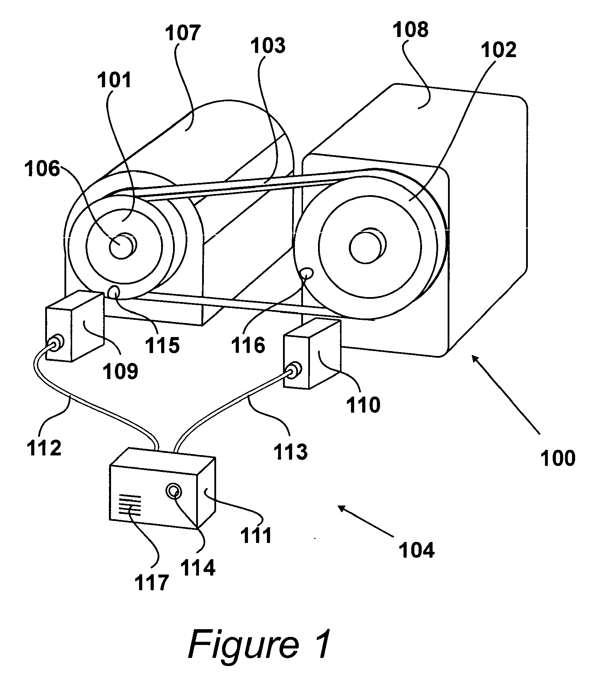

A system 100 comprising a drive pulley 101, a load pulley 102 and a belt 103 operatively connecting said drive pulley and said load pulley is shown in Figure 1, along with apparatus 104 configured to monitor said system.

The drive pulley is rigidly connected to its shaft 106, and in the present example, this is directly driven by an electric motor 107. However, it will be understood that the shaft may be driven indirectly, for example through a gearbox and may be driven by means other than the motor 107.

The load pulley 102 is driven by the drive pulley 101 via the belt 103, which in the present example is a simple V-belt. The load pulley itself drives a shaft relating to load apparatus 108. The load apparatus 108 may be, for example, a pump, a fan, etc.

When drive belts such as belt 103 are first fitted, energy is transferred from the drive pulley to the load pulley with an efficiency of typically 98%. However, during use, the belt wears and the efficiency consequently drops over time. Thus, an increasing amount of energy provided by the drive pulley to the belt is wasted. In addition, if the wear is allowed to continue, this can lead to the belt becoming broken and the load apparatus not being driven at all.

The increase in energy wastage corresponds with an increase in slippage of the belt with respect to one or both of the pulleys. When no slippage occurs, the magnitude of linear velocity of the belt is equal to the magnitude of linear velocity of each of the drive and load pulleys at points on the pulleys that contact the belt. Thus, as slippage increases, this linear velocity of the load pulley becomes less than the linear velocity of the drive pulley.

The magnitude of the radial velocity of each pulley is given by the magnitude of its linear velocity divided by its radius. Therefore, the increase in slippage (and energy wastage) also corresponds with a decrease in the ratio of radial velocity of the load pulley to that of the drive pulley.

The apparatus 104 is configured to generate a measure of the respective periods of rotation of the load and drive pulleys and thereby monitor the efficiency of the radial velocity transfer between the drive pulley 101 and the load pulley 102.

The apparatus 104 comprises a pair of sensors mounted within sensor units 109 and 110 and a control unit 111 which provides electrical power to the sensor units 109 and 110 and also receives sensor output signals from said sensor units, via cables 112 and 113.

A marker, in the form of a patch of paint is applied to both the drive pulley and the load pulley adjacent to their peripheral edges. Thus, the drive pulley 101 has a patch of paint 115, while the load pulley 102 has a patch of paint 116.

The sensor units 109 and 110 contain sensors comprising transistors that are configured to be sensitive to infrared, and provide an electrical output signal which greatly increases when the intensity of infrared received is greater than a predetermined value. The first sensor unit 109 has a sensor pointed towards a location adjacent to the peripheral edge of the drive pulley 101, and the second sensor unit 110 similarly has a sensor pointed towards a location adjacent to the peripheral edge of the load pulley 102. The paint forming the markers 115 and 116 is chosen to be highly reflective for the frequencies of infrared that are sensed by the sensors. Consequently, the sensors receive infrared reflected from their respective pulleys, and, at times when the markers 115 and 116 pass in front of the sensors, the received infrared is increased.

The pulleys 101 and 102 are illuminated by infrared comprising frequencies to which the sensors are sensitive. In the present embodiment, each pulley is illuminated by a respective emitter located within the same unit as the sensor. Each sensor and emitter pair is formed as a single unit with the emitter comprising an infrared emitting diode (IRED). The control unit has an output LED 114 of the type that emits red light in dependence of applied input voltages.

The control unit 111 receives output signals from the sensors of the units 109 and 110 and in dependence of these signals it determines a value indicative of the efficiency of energy transfer from the drive pulley 101 to the load pulley 102. If the control unit detects that the efficiency is above a pre-determined threshold value then the LED remains unlit. However, if it is determined that the efficiency value has dropped below the threshold value then the control unit emits red light from its LED 114

In one embodiment of the present invention, the control unit 111 has a loudspeaker 117 for providing an audible alarm. The loudspeaker remains silent when the efficiency value is above the predetermined threshold value and emits an audible alarm when the efficiency value falls below the threshold value.

In the present embodiment, infrared sensors are used with infrared emitting diodes emitting frequencies to which the sensors are sensitive. However, other embodiments are envisaged in which other electromagnetic radiation is used. For example, in one alternative embodiment visible light LEDs (light emitting diodes) are used to provide illumination and visible light sensors are used to detect reflected emitted light.

### Figure 2

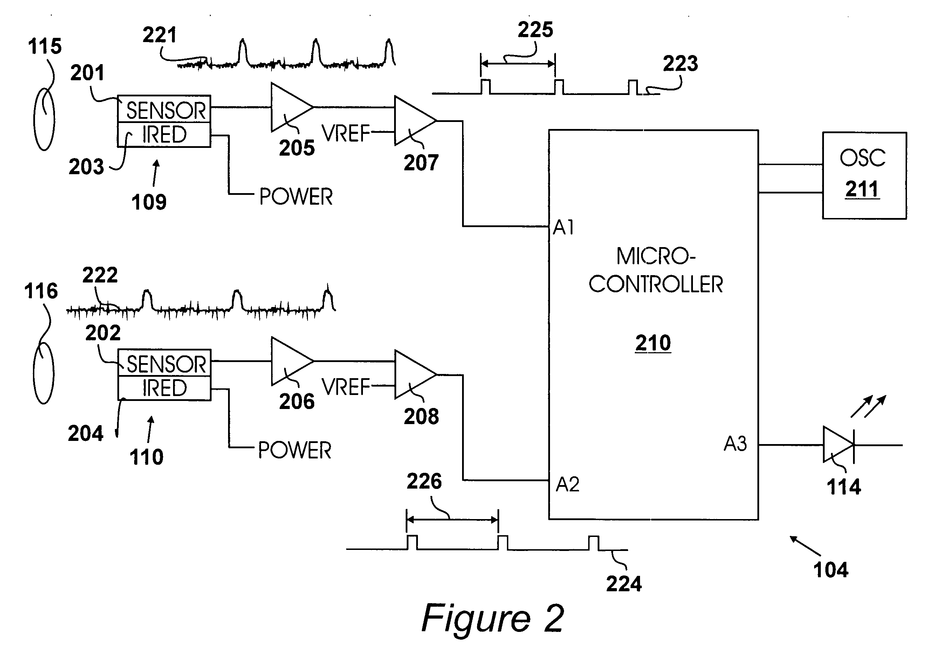

A schematic diagram of the monitoring apparatus 104 is shown in Figure 2. As described above, the sensor units 109 and 110 comprise of a respective infrared sensor 201 and 202, as well as an infrared emitting diode (IRED) 203, 204. The output signal from the sensor 201 is connected to a buffer amplifier 205 which has its output connected to the input of a comparator 207.

The buffer amplifier 205 ensures that potentially harmful spikes in the signal received from the sensor are not transmitted to the more sensitive components in the control unit 111.

The comparator 207 is of a Schmitt trigger type which, in operation, is supplied with the signal 221, generated by amplifier 205, and a reference voltage (VREF). The amplified signal typically contains noise as well as pulses corresponding to periods when infrared is reflected back from the paint patch 112.

The Schmitt trigger compares the input signal 221 with the reference voltage (VREF) and generates a high output voltage when the signal exceeds the reference voltage and a low output voltage when the signal drops below the reference voltage. Consequently, the Schmitt trigger effectively cleans up the signal to produce a relatively noise free output signal 223 comprising a series of square pulses. As will be understood, the periods 225 between consecutive pulses of the signal 223 corresponds to the time taken for the drive pulley 101 to perform one revolution.

In a similar manner the output from the second sensor 202 is provided to a second buffer amplifier 206 which has its output connected to a second Schmitt trigger 208. Consequently, after amplification, the signal 222 generated by the sensor 202 is processed by the Schmitt trigger 208 to generate a signal 224 comprising square pulses. These pulses are separated in time by a period 226 that corresponds with the period of rotation of the load pulley 102.

The output of the first Schmitt trigger 207 is connected to a first digital input port referred to as A1 of a microcontroller 210 and the output of the second Schmitt trigger 208 is connected to a second digital input port referred to as A2 of said microcontroller.

The microcontroller in the present example is typically a PIC 10 as manufactured by Microchip, USA. The microcontroller is driven by a crystal oscillator 211 typically having a clock frequency of 4 MHz. An output port A3 of the microcontroller 210 is connected to the LED 114 and the loudspeaker117.

The microcontroller comprises data processing means, ROM (read only memory) and RAM (random access memory). The ROM is used to store preset values, while the RAM, of flash memory type, is used to store program instructions and values generated when the microcontroller operates under the program instructions.

In a further alternative embodiment, the control unit is provided with an LCD (liquid crystal display) which displays the value indicative of the efficiency of velocity transfer from the drive pulley 101 to the load pulley 102. In this embodiment the microcontroller 210 is upgraded with a microcontroller, such as a PIC 18 (again manufactured by Microchip, USA), that is capable of driving such a display.

Other alternative embodiments are envisaged in which the value indicative of efficiency of velocity transfer is supplied to a serial port, capable of communicating using RS232 or RS485 protocols, for communication to a computer with suitable RS232 or RS485 transmission/reception facilities.

In yet another alternative embodiment, the value indicative of efficiency is supplied to a radio device configured to transmit said value.

### Figure 3

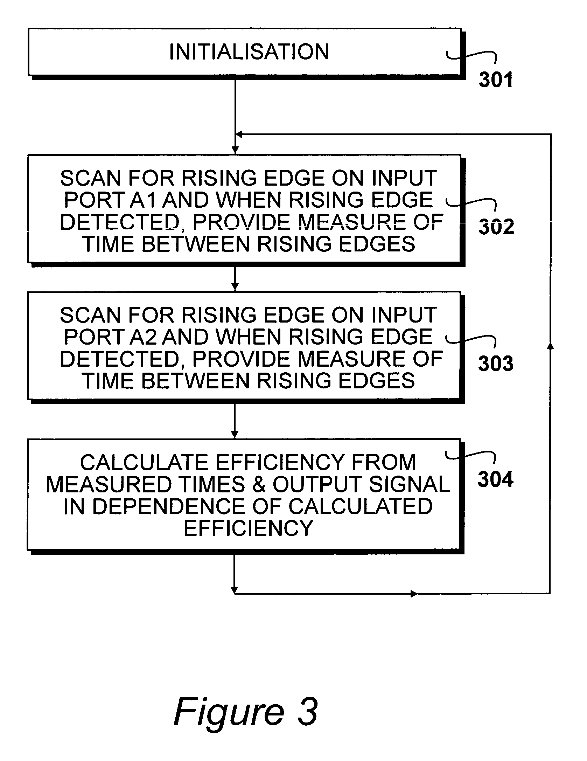

A master algorithm indicating the operation of the microcontroller 210 is shown in the flowchart of Figure 3.

During operation, the microcontroller 210 uses several flags and counters and these are initialised at step 301.

The signals 223 and 224 applied to the input ports A1 and A2 comprise of a series of square shaped pulses defined by rising edges and falling edges. At steps 302 and 303 the microcontroller scans the input ports A1 and A2, essentially to detect rising or falling edges of the square pulses of the input signals 223 and 224. Following the detection of a sequence of rising and falling edges, a value providing a measure of the period of time (such as 225 and 226) between successive rising edges of a signal is stored. The stored values are then used in a calculation at step 304, which generates a value indicative of the efficiency of radial velocity transfer of the monitored system 100. An output signal dependent upon the calculated value is then supplied to the output port A3.

### Figure 4

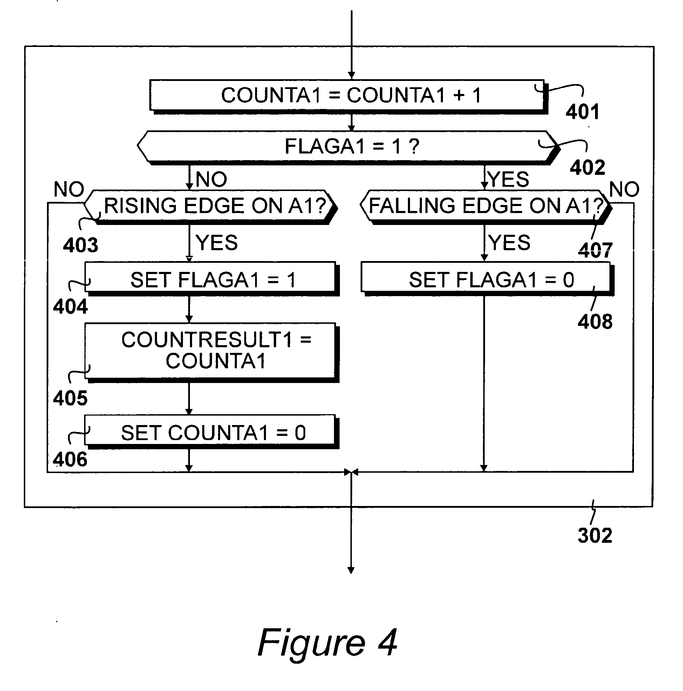

The step 302 of Figure 3 is shown in detail in Figure 4. Initially within step 302, a counter COUNTA1 is incremented by one at step 401. Then, at step 402, it is determined whether a flag, FLAGA1, is set equal to 1, indicating that the most recently detected edge of the signal 223 was a rising edge. If the question at step 402 is answered in the negative (indicating that the most recently detected edge was a falling edge) then it is determined at step 403 whether or not a rising edge has now occurred. To perform this step, it is determined if the current value of the signal at input port A1 is high or low. If it is high, then a rising edge is detected and the question at step 403 is answered in the affirmative. Consequently, the process enters step 404 where the flag, FLAGA1, is set to 1. The current value of the counter COUNTA1 is stored as COUNTRESULT1 at step 405, and the counter COUNTA1 is reset to zero at step 406. On completion of step 406, step 302 is also completed.

If, at step 403, the signal at input A1 is still low then no edge is detected, and the question at step 403 is answered in the negative. This also completes step 302.

If the question at step 402 is answered in the affirmative, indicating that the most recently detected edge was a rising edge then the process determines at step 407 if a falling edge has now occurred at step 407. That is, at step 407, it is determined whether the value of the signal at input port A1 is now low indicating that a falling edge has occurred, or if it is still high. If a falling edge is detected at step 407, then the flag FLAGA1 is reset to zero at step 408, and step 302 is completed. Alternatively, if a falling edge is not detected at step 407 then step 302 is completed without further action.

Thus, it should be understood that when a rising edge is detected at step 403, flag FLAGA1 is set to 1 and the counter COUNTA1 is reset to zero. Step 302 is then repeatedly performed (as indicated in Figure 3), employing steps 401, 402, and 407, until a falling edge is detected at step 407 resulting in the flag FLAGA1 being reset to zero at step 408. The step 302 is then repeatedly performed, employing steps 401, 402 and 403 until a rising edge is detected at step 403. On detection of this rising edge, the current value of counter COUNTA1 is stored as COUNTRESULT1. So, COUNTRESULT1 obtains a value equal to the number of iterations of step 302 between consecutive rising edges of waveform 223.

Thus, step 302 generates a value, COUNTRESULT1, which provides a measurement of the period of rotation of the drive pulley 101.

It will be understood from Figure 3 that step 302 continues to be repetitively performed in the above described manner, and each time step 405 is performed the value of COUNTRESULT1 is updated.

### Figure 5

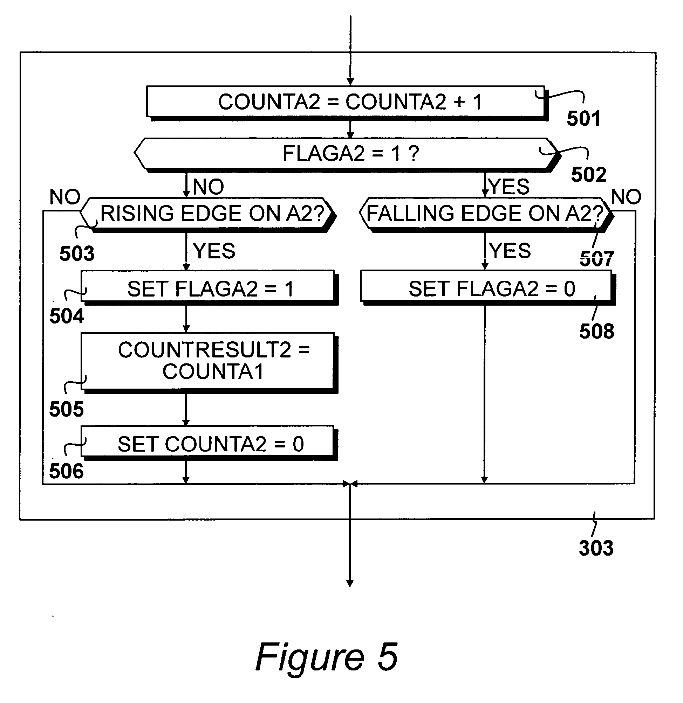

The step 303 of Figure 3 is shown in detail in Figure 5. For the sake of brevity, step 303 will not be described here in such detail as step 302. However, it should be noted that step 303 mirrors step 302, and comprises steps 501 to 508 corresponding to steps 401 to 408. Within step 303, a flag (FLAGA2) monitors the status of the input at port A2, and a counter COUNTA2 counts iterations of step 303 between appropriate rising and falling edges of the signal 224. This results in a value being stored as COUNTRESULT2 that is equal to the number of iterations of step 303 between consecutive rising edges of waveform 224, and which provides a measurement of the period of rotation of the load pulley 102.

The present embodiment identifies the time period between consecutive rising edges of the square pulse of signals 223 and 224, but it is envisaged that the time period between falling edges of the pulses could be used as an alternative.

### Figure 6

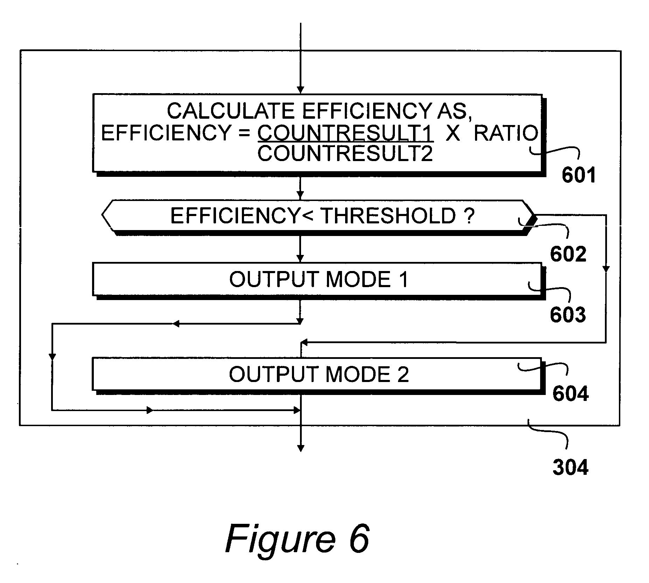

The step 304 from Figure 3 is shown in detail in the flow chart of Figure 6. Firstly, a calculation is performed at step 601 to produce a value stored as EFFICIENCY that provides an indication of the efficiency by which velocity is transmitted between drive pulley and load pulley using drive belt 103. The value of EFFICIENCY is found by dividing the current value of COUNTRESULT1 by COUNTRESULT2 and multiplying by a constant labelled RATIO. The value of RATIO is pre-stored as a constant value in the memory of microcontroller 210 and is equal to the diameter of the load pulley divided by the diameter of the drive pulley.

Thus, for example, in the case where the apparatus 104 is used to monitor a system having a drive pulley and load pulley of the same diameter then the vale of RATIO will be set to one. In this case, the value of EFFICIENCY will simply be equal to COUNTRESULT1 divided by COUNTRESULT2; i.e. it will be equal to the period of rotation of the drive pulley divided by the period of rotation of the load pulley.

In another example, where the diameter of the load pulley is twice that of the drive pulley, then the value of EFFICIENCY will be twice the value of COUNTRESULT1 divided by COUNTRESULT2. I.e. It will be twice the period of rotation of the drive pulley divided by the period of rotation of the load pulley.

In embodiments that allow for the value of EFFICIENCY to be displayed or output, then this is done following step 601. However, in the present embodiment, it is determined, at step 602, whether the value of EFFICIENCY determined at step 601 is less than a pre-determined threshold value stored in the memory of the microcontroller 210. This pre-determined threshold value is typically set at 85% (i.e. 0.85). If EFFICIENCY is found to be less than the threshold value at step 602 then a first mode of output is performed at step 603, alternatively a second mode of output is performed at step 604. Thus, in the present example, in the first mode of output, an output signal is provided to the LED 114 such that it emits a red light, whereas in the second mode of output, an output signal is provided to the LED 114 such that it emits a green light.

On completion of either step 603 or 604, step 304 is also completed.

It will be understood that the microcontroller recalculates the value of EFFICIENCY using the most recently obtained values of COUNTRESULT1 and COUNTRESULT2 each time that step 304 is performed.

In alternative embodiments, the microcontroller 210 stores a set of values comprising several of the most recently obtained values of COUNTRESULT1 and a similar set comprising several of the most recently obtained values of COUNTRESULT2. In these embodiments, the value EFFICIENCY is obtained by adding the set of values of COUNTRESULT1 and dividing by the sum of the set of values of COUNTRESULT2, before multiplying by the constant RATIO. Thus, the value of EFFICIENCY is effectively found for several rotations of the pulleys, and aliasing effects are reduced.

### Figure 7

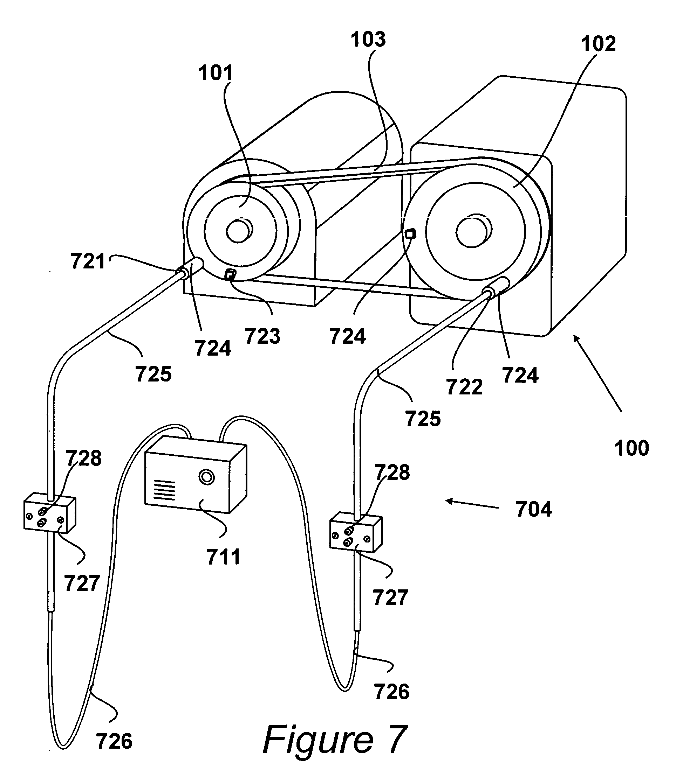

The system 100 previously shown in Figure 1, is shown in Figure 7, along with an alternative apparatus 704 configured to monitor the system.

The apparatus 704 is substantially the same as the apparatus 104, except that: the infrared sensor units 109 and 110 are replaced by Hall effect sensor units 721 and 722; and the markers 115 and 116 on the pulleys 101 and 102 are replaced by small permanent magnets 723 and 724. Thus, a small permanent magnet 723 is fixed to the drive pulley 101 near to its outer rim, and a similar permanent magnet 724 is fixed to the load pulley 102 near to its outer rim.

In the present example the magnets are attached by an epoxy resin adhesive. However, in a preferred embodiment, the magnets are formed in a flat ring shape (typically 2mm thick and 15mm in diameter) having a central circular aperture. A similar sized aperture is drilled in each of the pulleys and the magnets are attached to the pulleys by a screw fastener, such as a nut and bolt. The magnets are therefore fastened to the pulleys by the fasteners, but in addition the magnets and fasteners are also bonded to the pulleys by epoxy resin.

In the present embodiment, the magnets are fixed to the outside of the pulley rims, that is, on the side of the pulley facing away from the drive motor or the load device. However, in a preferred embodiment the magnets are mounted on the pulley rims on the inside of the pulleys, that is, on the side that faces the drive motor, in the case of the drive pulley, and the side that faces the load device, in the case of the load pulley. Now, when a worn belt must be replaced, the old belt is generally levered off the outside edge of the pulley, but the magnets are positioned on the inside of the pulleys and so they do not inhibit the belt changing function.

The Hall effect sensor units 721 and 722 are substantially identical in design. Each sensor unit 721, 722 has a Hall effect transistor in a sensor housing 724 mounted at the end of a stalk 725. The stalk in the present example is formed of copper tubing and carries electrical wiring 726 between the Hall effect transistors and a control unit 711. The stalks are mounted within holes formed through mounting blocks 727. Bolts 728 located within threaded holes of the mounting blocks hold the stalks in place but may be temporarily released to allow positional adjustment of the stalks.

The sensor housings 724 are positioned such that the Hall effect transistors are located sufficiently close to the rims of the respective pulleys 101, 102 so that the permanent magnets are effective on the operation of transistors. In most cases, a system such as system 100 is provided with a protective cover over the belt for safety reasons. Where a protective cover is provided, the sensors 721 and 722 are located within the protective cover.

In the present embodiment, only one magnet is attached to each pulley, but in other embodiments two or more magnets are attached, equally spaced around the pulley.

In a further alternative embodiment, only one magnet is attached to each pulley, but one or more weights are also attached to each pulley to maintain the balance of the pulley and avoid unnecessary vibrations and wear in the system.

Apparatus 704 relies on Hall effect sensors that sense movement of magnets (723, 724) attached to the pulleys, whereas apparatus 104 relies on infrared sensors for sensing movement of markers (115, 116) located on the pulleys. However, it should be understood that in each case objects (in the form of the magnets or the markers) are located on the pulleys of an existing system so that the rotation of the system's pulleys can be monitored.

### Figure 8

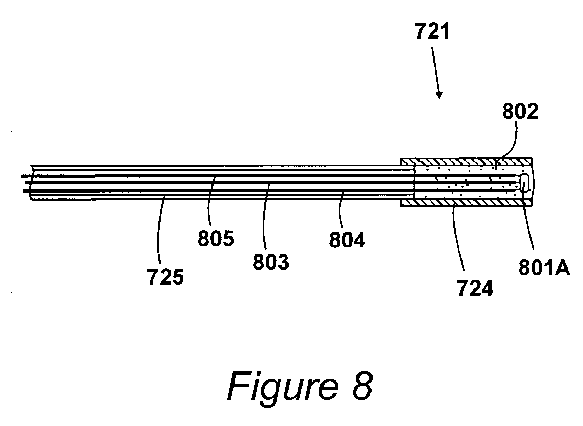

A partial cross-sectional view of the Hall effect sensor unit 721 is shown in Figure 8.

The Hall effect transistor 801A is potted in an electrically insulating and non-magnet substance 802, such as epoxy resin, within the sensor housing 724. The housing is formed of a non-magnet material such as aluminium or copper tubing, and is itself rigidly attached to the stalk 725 by an adhesive, in this case epoxy resin.

Electric wires extend through the stalk 725 from contacts on the transistor 801A to the control unit 711. Two of the wires, 803 and 804, provide power to the transistor. Wire 803 is held at zero volts and wire 804 is held at five volts by a power supply located in the control unit 711. The third wire 805 communicates the output from the transistor to the control unit 711. In the present embodiment, the transistor is one of a type that produces an output voltage of 2.5 volts when the transistor is in a space substantially free from magnet-field, and an output of either zero volts or five volts when it is immersed in a magnetic field. In the latter case, the actually voltage (zero volts or five volts) depends upon the polarity of the magnetic field. However, the permanent magnet 723 is arranged such that it causes the Hall effect transistor 801A to produce an output of five volts when it is brought close. (The permanent magnet 724 is similarly arranged for the transistor of sensor unit 722.)

Thus, in operation the Hall effect transistor 801A generally produces an output of 2.5 volts but, as the magnet 723 rotates close to it, the output switches to five volts. Consequently, the transistor 801 supplies a signal to the control unit 711 comprising a series of pulses, such that each pulse corresponds to a revolution of the drive pulley 101. The Hall effect transistor of the sensor unit 722 similarly provides a signal to the control unit 711 comprising a series of pulses, such that each pulse corresponds to a revolution of the load pulley 102.

The control unit 711 processes the pulsed signals from the Hall effect transistors, in a similar manner to that described above for control unit 111. The apparatus 704 therefore operates in essentially the same way as apparatus 104, except for its use of Hall effect sensors in place of infrared sensors. However, the apparatus 704 has the advantage that it is not affected by high levels of infrared radiation which are found in many environments that belt and pulley systems, such as system 101, are used in.

### Figure 9

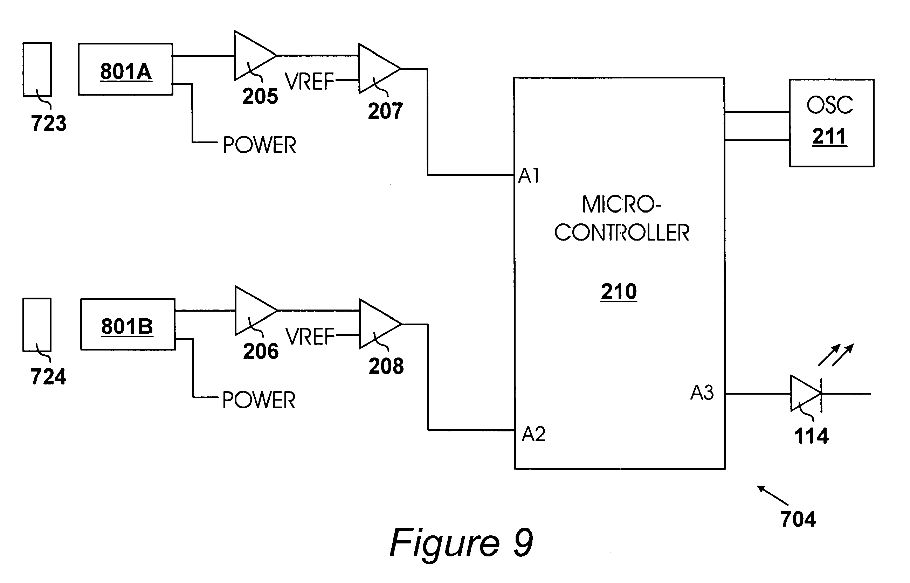

A schematic diagram of the monitoring apparatus 704 is shown in Figure 9. As the apparatus is generally the same as apparatus 104, the components that are common to the two system have been provided with the same references numbers. Thus the output from the Hall effect transistors 801A and 801 B of sensor units 721 and 722 are provided to the buffer amplifiers 205 and 206 respectively.

As mentioned above, the operation of the apparatus 704 is essentially as described for apparatus 104, and therefore it will not be further discussed here.

## Claims

1. Apparatus for monitoring a system comprising a drive pulley, a load pulley and a belt operatively connecting said drive pulley and said load pulley, said apparatus comprising:
a first object locatable on said drive pulley;
a second object locatable on said load pulley;
a first sensor configured to detect movement of said first object and thereby generate a first signal indicating rotation of a drive pulley;
a second sensor configured to detect movement of said second object and thereby generate a second signal indicating rotation of a load pulley;
processing means configured to (i) generate a first measurement value dependent upon a period between features of said first signal, (ii) generate a second measurement value dependent upon a period between features of said second signal, (iii) calculate a value indicative of efficiency of said system from said first measured value and said second measured value, and (iv) provide an output signal in dependence of said calculated value.

2. Apparatus according to claim 1, wherein said features of said first signal are rising edges of said first signal.

3. Apparatus according to claim 1 or claim 2, wherein said processing device performs a counting-function between said features of said first signal, and said first measurement value is produced by said counting-function.

4. Apparatus according to any one of claims 1 to 3, wherein said apparatus comprises a transducer configured to receive said output signal and generate a human detectable signal.

5. Apparatus according to claim 4, wherein said transducer is configured to generate a viewable output.

6. Apparatus according to claim 4, wherein said transducer is configured to generate an audio signal.

7. Apparatus according to any one of claims 1 to 6, wherein said first object comprises a magnet and said first sensor produces an output signal having one value when a magnetic field is present and a second value in the absence of a magnetic field.

8. Apparatus according to any one of claims 1 to 6, wherein said first object comprises a magnet and said first sensor comprises a Hall effect transistor.

9. Apparatus according to any one of claims 1 to 8, wherein said apparatus comprises an output port configured to provide said signal to a computer.

10. Apparatus according to any one of claims 1 to 9, wherein said apparatus further comprises a radio device configured to receive said output signal and transmit a radio signal indicative of said output signal.

11. Apparatus according to any one of the preceding claims and further comprising:
a drive pulley;
a load pulley; and
a belt operatively connecting said drive pulley and said load pulley,
wherein said first sensor is configured to generate said first signal indicating the orientation of said drive pulley, and said second sensor is configured to generate said second signal indicating the orientation of said load pulley.

12. Apparatus according to claim 11, wherein said drive pulley is driven by a shaft extending from one side of said drive pulley and said magnet is located on said side of said drive pulley.

13. A method of monitoring a system comprising a drive pulley, a load pulley and a belt operatively connecting said drive pulley and said load pulley, said method comprising:
positioning a first object on to said system such that said first object rotates with said load pulley;
positioning a second object on to said system such that said second object rotates with said load pulley;
obtaining a first measurement value dependent upon a period of rotation for said drive pulley by sensing movement of said first object;
obtaining a second measurement value dependent upon a period of rotation for said load pulley by sensing movement of said second object;
calculating a value indicative of efficiency of said system from said first measured value and said second measured value; and
providing an output signal in dependence of said calculated value.

14. A method for monitoring a system according to claim 13, wherein said first object is a magnet and the method comprises detecting variations in a magnetic field at a sensing device that generates a signal in dependence of the detected magnetic field, and said first measurement value is obtained from features of said signal.

15. A method for monitoring a system according to claim 14, wherein said first measurement value is obtained by counting during a period between occurrences of said features of said signal.
